# EUROPÄISCHE PATENTSCHRIFT

(11) **EP 2 061 815 B1**
(45) Veröffentlichungstag und Bekanntmachung des Hinweises auf die Patenterteilung: **13.01.2010**
(21) Anmeldenummer: 07724339.2
(22) Anmeldetag: 18.04.2007
(51) Int. Cl.: C08B 11/20, C08B 11/193

(54) **VERFAHREN ZUR WÄSCHE VON POLYSACCHARIDDERIVATEN**
PROCESS FOR WASHING POLYSACCHARIDE DERIVATIVES
PROCÉDÉ DE PURIFICATION DE DÉRIVÉS DE POLYSACCHARIDE

(30) Priorität: 09.09.2006 DE 102006042438
(43) Veröffentlichungstag der Anmeldung: 27.05.2009
(73) Patentinhaber: Dow Global Technologies Inc., Midland, MI 48674 (US)
(72) Erfinder: SPREHE, Matthias, 29664 Walsrode (DE); KLOHR, Erik-Andreas, 29664 Walsrode (DE); KOWOLLIK, Martin, 29683 Bad Fallingbostel (DE); VIERECK, Werner, 29664 Walsrode (DE)
(74) Vertreter: Polypatent
(86) Internationale Anmeldenummer: PCT/EP2007/003402
(87) Internationale Veröffentlichungsnummer: WO 2008/028523

(56) Entgegenhaltungen:
- EP-A2- 0 326 939
- EP-A2- 0 351 629
- WO-A-98/31710
- WO-A-02/100512
- DE-A1- 3 044 696
- DE-A1-102004 033 328

## Beschreibung

Die vorliegende Erfindung betrifft ein neues Verfahren zur Abtrennung und Reinigung von Polysaccharidderivaten, bevorzugt Celluloseethern aus einer Suspension unter Einsatz einer kontinuierlichen Filtereinrichtung mit einer Mehrzahl von Arbeitzonen bei zwischenzeitlicher Resuspendierung des Filterkuchens.

Zu den technisch bedeutenden Polysaccharidderivaten gehören die Celluloseether, wie Natrium-Carboxymethylcellulosen, Hydroxyethylcellulosen, Alkyllcellulosen, Alkylhydroxyethylcellulosen oder Alkylhydroxypropylcellulosen. Ihre Herstellung, Eigenschaften und Anwendungen werden unter anderem in Ullmann's Encyclopedia of Industry Chemistry, 5th Edition (1986), Volume A5, Page 461-488, VCH Verlagsgesellschaft, Weinheim und Methoden der organischen Chemie, 4. Auflage (1987), Band E20, Makromolekulare Stoffe, Teilband 3, Seite 2048-2076, Georg Thieme Verlag Stuttgart beschrieben.

Celluloseether sind quellbar oder kolloidal löslich, sie erhöhen die Viskosität des Lösungsmittels und stellen über ihre Lösungsstruktur ein bestimmtes rheologisches Profil ein. Die drei wesentlichen Eigenschaften von Celluloseethern, das Löseverhalten, die resultierende Lösungsstruktur und die Fähigkeit zur Bindung von Lösungsmittel durch den Celluloseether hängen von molekularen Kenngrößen, wie der Art, Anzahl und Verteilung der Substituenten und der Molmassenverteilung ab.

Für die unterschiedlichsten Anwendungsbereiche werden Celluloseether mit unterschiedlichen Substitutionsgraden hergestellt. Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsübstitution wird beispielsweise als DS (M) angegeben. Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (HE), die Veretherung mit dem Veretherungsreagenz Propylenoxid als MS (HP) angegeben.

Die Löslichkeit in Wasser nimmt bei Celluloseethern mit hydrophoben Substituenten wie z. B. Alkylgruppen mit steigender Temperatur ab. Ein in kalter wässriger Lösung aufgelöster Celluloseether mit hydrophoben Substituenten kann durch Erwärmen der Lösung ausgeflockt werden. Der Vorgang ist reversibel, bei Abkühlung der Lösung geht der Celluloseether wieder in Lösung. Der Flockpunkt ist abhängig vom Substituenten, vom Substitutionsgrad sowie vom Elektrolytgehalt und kann gewöhnlich zwischen 20 °C und 100 °C variiert werden. Als Beispiel seien hier Methylhydroxyalkylcellulosen aufgeführt, bei denen sich durch Variation des Methyl- und/oder des Alkylanteils der Flockpunkt nahezu beliebig einstellen lässt. Mit zunehmender Methylsubstitution sinkt im allgemeinen der Flockpunkt, mit steigender Hydroxyethylierung wird der Flockpunkt gemeinhin zu höheren Temperaturen verschoben und mit steigendem Elektrolytgehalt (z. B. Natriumchlorid) wird generell eine Absenkung des Flockpunktes verursacht.

Als Nebenprodukte bei der Celluloseetherherstellung fallen Salze, wie Natriumchlorid, Natriumglykolat oder Natriumacetat an sowie eine Vielzahl organischer Nebenprodukte, wie Alkohole (Methanol, Ethanol u. a.), Ether (Dimethylether u. a.), Glykole (Ethylen-/Propylenglykol u. a.), Glykolether (Ethylen-/Propylenglykol-monomethylether u. a.), die die anwendungstechnischen Eigenschaften des Celluloseethers negativ beeinflussen können und daher abgetrennt werden müssen. In Abhängigkeit vom Einsatzgebiet werden dabei zum Teil sehr hohe Anforderungen an die Reinheit der Celluloseether gestellt, so dass die Produktwäsche einen wichtigen Verfahrensschritt darstellt.

In diesem Zusammenhang ist die Abhängigkeit des Flockpunktes vom Substituenten, vom Substitutionsgrad und vom Elektrolytgehalt für die industrielle Herstellung von Celluloseethern von großer Bedeutung, da hierdurch die Reinigung von Nebenprodukten und Salzen mittels heißem Wasser anstelle von Wasser-Alkohol-Mischungen ermöglicht wird. Zudem hat der Substitutionsgrad und der Elektrolytgehalt der Celluloseether Einfluss auf die benötigten Temperaturen der Heißwassersuspension. Üblicherweise liegen die Temperaturen der Heißwassersuspension und der Waschflüssigkeiten zwischen 80°C und 120°C.

Üblicherweise wird dieser Reinigungsprozess technisch durch die Herstellung einer Suspension des Rohcelluloseethers in heißem Wasser oder organischem Lösungsmittel und anschließender Trennung der Suspension in Feststoff und Flüssigphase durchgeführt. Durch erneutes Beaufschlagen mit Waschflüssigkeit, Dampf, Luft oder mechanischem Druck lässt sich eine bestimmte Reinheit des Endproduktes mit einer entsprechenden Feuchte herstellen. Technisch wird die Abtrennung und Reinigung der Celluloseether im Allgemeinen mit Tellerseparatoren (EP-A 0632056), Hydrozyklonen (WO 95/25127), Bandfiltem (DE-A 3044696), Kerzenfiltern (EP-A 0305898), Druckpressfiltern (DE-A 4112849), Druckdrehfiltern (EP-A 0326939) oder Zentrifugen, wie Vollmantelzentrifugen (EP-A 0052337) oder Stülpfilterzentrifugen (EP-A 0305899), durchgeführt, wobei auch Nachwaschschritte in den Trennapparaten selbst möglich sind. Üblicherweise wird ein Teil der Suspensions-, Wasch- oder Spülflüssigkeit in den Herstellungsprozess zurückgeführt, um Produktverluste zu minimieren und den Wasserverbrauch zu reduzieren.

Nachteile dieser Technologien sind die eingeschränkte Einsetzbarkeit zur stabilen und effektiven Reinigung von Celluloseethern. Aufgrund von Produktablagerungen, Verklebungen, Verstopfungen und der Notwendigkeit von im Verhältnis zum Separationsvorgang langen Reinigungsintervallen werden ein stabiler Betrieb, die Anlagenverfiigbarkeit und der Wirkungsgrad der Separationsaggregate maßgeblich beeinträchtigt. Dieses betrifft insbesondere die Reinigung von Produkten, die plastische oder kompressible Verhaltensweisen aufweisen und somit zur Vergelung oder Verdichtung neigen.

Zudem können aufgrund der temperaturabhängigen Löslichkeit der Produkte, der begrenzten Trenneffektivität der Separationsaggregate und auftretender Produktablagerungen zum Teil erhebliche Produktverluste auftreten, die nur unter großem Aufwand und Einsatz zusätzlicher Trennaggregate minimiert werden können (EP-A 0632056, DE-A 4134662, EP-A 0545426).

Die Verwendung der üblichen Technologien zur Erzielung eines erhöhten Reinheitsgrades bei der Herstellung von Produkten für spezielle Anwendungen, wie z. B. im Pharma- und Foodbereich, ist nur mit einem sehr großen operativen Einsatz unter Einsatz erheblicher Waschwassermengen möglich.

Aus DE 10 2004 033 328 ist ein Verfahren zur Feststoffreinigung unter Einsatz eines Druckdrehfilters in Kombination mit einer Re-Suspendierung bekannt, jedoch wird in diesem Zusammenhang lediglich auf die gute Waschleistung nicht jedoch auf Vorzüge wie reduzierte Feststoffablagerung und/oder Produktvergelung hingewiesen, wie sie im Bereich der Polysaccharidherstellung und Verarbeitung auftreten und deren Vermeidung gerade hier von Bedeutung ist.

Es wurde nun überraschenderweise gefunden, dass sich die aus DE 10 2004 033 328 bekannte Verfahrensweise trotz erheblicher mechanischer und Druck-/Temperatur-Belastung der Feststoffpartikel während der Behandlung wirksam und effizient bei der Reinigung von Polysaccharidderivaten einsetzen lässt.

Gegenstand der Erfindung ist daher ein Verfahren zur Aufreinigung von Polysaccharidderivaten, wenigstens umfassend die Schritte (1) Zuführung einer wasser- und/oder alkoholenthaltenden Suspension eines Polysaccharidderivats in eine kontinuierlich arbeitende Filtervorrichtung mit mehreren Arbeitszonen und zumindest teilweise Abtrennung der Flüssigphase unter Ausbildung eines Filterkuchen, (2) Ausschleusung des in (1) erhaltenen Filterkuchens aus der kontinuierlich arbeitenden Filtervorrichtung, Re-Suspendierung des ausgeschleusten Filterkuchens mittels einer wasser- und/oder alkoholenthaltenden Waschlösung in einer Vorrichtung, (3) Rückführung der so erhaltenen Suspension in eine Arbeitszone der kontinuierlich arbeitenden Filtervorrichtung und wenigstens teilweise Abtrennung der Flüssigphase unter Ausbildung eines Filterkuchens und (4) Ausschleusung des gereinigten Polysaccharidderivats in Form eines gegebenenfalls wasser- und/oder alkoholfeuchten Filterkuchens aus der kontinuierlich arbeitenden Filtervorrichtung.

Nach Schritt (2) und vor Schritt (4) können in weiteren Arbeitszonen der kontinuierlich arbeitenden Filtervorrichtung weitere Behandlungsschritte erfolgen, wie eine zusätzliche Reinigung des Filterkuchens durch direkte Zufuhr von Waschflüssigkeit und/oder eine Beaufschlagung von Dampf, Luft oder Stickstoff zur Verdrängung von Restflüssigkeiten bzw. zur Trocknung des Filterkuchens.

Als Vorrichtung zur Re-Suspendierung des ausgeschleusten Filterkuchens in Schritt (2) wird ein Durchmischungsaggregat eingesetzt, bevorzugt ausgeführt als Rührbehälter, Schlaufenreaktor, Umwälzbehälter oder Strömungsrohr, besonders bevorzugt ausgeführt als Rührbehälter.

Als kontinuierlich arbeitende Filtervorrichtung mit mehreren Arbeitszonen kommen Bandfilter, Scheibenfilter, Trommel- oder Drehfilter in Frage. Bevorzugt werden so genannte Druckdrehfilter eingesetzt, wie sie beispielsweise in WO 02/100512 beschrieben sind. Ein Druckdrehfilter ist ein kontinuierlich arbeitendes Filter in druckdichter Ausführung. Es besteht im wesentlichen aus einer metallischen Filtertrommel, die sich mit stufenlos regelbarer Drehzahl dreht, einem zugehörigen Steuerkopf und einem metallischen, druckfesten Gehäuse. Der Ringraum zwischen Filtertrommel und Gehäuse wird seitlich durch Stopfbuchsen oder andere Dichtungssysteme abgedichtet. Radial ist das Gehäuse durch Zonentrennmittel, die pneumatisch an die Trommel angepresst werden, in druckdichte Kammern unterteilt. Die Trommeloberfläche besteht aus einzelnen Filterzellen, die über Ablaufrohre mit dem Steuerkopf verbunden sind. Eine detaillierte Beschreibung kann WO 02/100512 A1 entnommen werden. Die zu filtrierende Suspension wird unter konstantem Vordruck stetig der Trennzone des Druckdrehfilters zugeführt, wobei sich in den Filterzellen der rotierenden Trommel ein Filterkuchen aufbaut, der anschließend in die nachfolgenden Kammern zur Nachbehandlung, z.B. Wäsche und/oder Behandlung mit Wasserdampf, gelangt. Die Abnahme des Filterkuchens erfolgt in einer drucklosen Zone des Filters entweder durch einen selbsttätig agierenden, einstellbaren, mechanischen Schaber oder/ und über einen gezielten Rückblasstoß typischerweise mittels Druckluft, Stickstoff oder Wasserdampf. Eine genaue Beschreibung der Zonentrennmittel findet sich z.B. in WO 02/100512 A1.

In einer bevorzugten Ausführungsform umfasst das erfindungsgemäße Verfahren wenigstens die folgenden 8 Arbeitszonen:
1. Arbeitszone: Suspensionsaufgabe, Filterkuchenbildung
2. Arbeitszone: Einleitung von Wasserdampf
3. Arbeitszone: Abtrennung des Filterkuchens und Re-Suspendierung unter Zufuhr von Waschmedium in einem separaten Rührbehälter
4. Arbeitszone: Rückführung der Suspension, Filterkuchenbildung
5. Arbeitszone: Zufuhr von Waschmedium
6. Arbeitszone: Einleitung von Wasserdampf
7. Arbeitszone: Produktabtrennung vom Filtermittel
8. Arbeitszone: Zufuhr von Spülwasser zur Filtennittelreinigung

Es sei ausdrücklich darauf hingewiesen, dass die Anzahl und Reihenfolge der Arbeitszonen nicht notwendigerweise wie aufgeführt sein müssen. Es können im erfindungsgemäßen Verfahren zusätzliche Arbeitszonen vor- und nachgeschaltet sein, zwischen den einzelnen Arbeitszonen weitere Arbeitszonen mit unterschiedlichen Aufgaben angeordnet sein sowie einzelne aufgeführte Arbeitszonen eliminiert werden. Zudem kann alternativ oder zusätzlich zur Waschmedium- oder Spülwasserzugabe Wasserdampf und/oder Druckluft eingesetzt werden.

Bei der Wäsche und Separation von Polysaccharidderivaten mittels Druckdrehfiltern sind die Filtermaterialien nach dem Stand der Technik als ein- oder mehrlagige Sieb- oder Filtergewebe in Metall oder Kunststoff oder als Sintermetall ausgeführt. Zum Einsatz kommen im vorgenannten Verfahren Siebgewebe mit einer Maschenweite von 50 bis 200 µm, besonders bevorzugt 60 bis 100 µm.

Die Filterbeladung, angegeben als filtriertes getrocknetes Fertigprodukt pro Filterfläche und Zeiteinheit, liegt im vorgenannten Verfahren bei 100 bis 800 kg/m² h, besonders bevorzugt 150 bis 600 kg/m² h.

Die Umlaufgeschwindigkeit des im vorgenannten Verfahrens eingesetzten Druckdrehfilters liegt üblicherweise bei 0,3 bis 2,5 U/min, bevorzugt 0,35 bis 1,8 U/min.

Die Verweilzeit des zu re-suspendierenden Filterkuchens in der zur Re-Suspendierung eingesetzten Vorrichtung wird im vorgenannten Verfahren auf 1 min bis 30 min, bevorzugt 3 min bis 15 min eingestellt.

Der Filterkuchen wird nach dem Stand der Technik vorzugsweise mit Heißwasser und Wasserdampf behandelt. Im vorgenannten Verfahren wird in den oben aufgeführten Arbeitszonen 2 und 6 Wasserdampf mit Drücken von 0,1 bar(ü) bis 6,0 bar(ü), bevorzugt 0,3 bar(ü) bis 4,5 bar(ü) und besonders bevorzugt 0,5 bar(ü) bis 3,0 bar(ü) eingesetzt.

Die Temperaturen der Heißwassersuspension und der Waschflüssigkeiten beim erfindungsgemäßen Verfahren bei 35°C bis 120°C, bevorzugt bei 60 °C bis 110 °C, besonders bevorzugt bei 80 °C bis 99 °C.

In Arbeitszone 3 werden im vorgenannten Verfahren spezifische Waschwassermengen, angegeben als Wassermenge pro Menge filtriertes, getrocknetes Endprodukt, von 1,5 l/kg bis 35 l/kg, bevorzugt von 2 l/kg bis 15 l/kg eingesetzt.

In Arbeitszone 5 werden im vorgenannten Verfahren spezifische Waschwassermengen, angegeben als Wassermenge pro Menge filtriertes, getrocknetes Endprodukt, von 0 l/kg bis 20 l/kg, bevorzugt von 1 l/kg bis 10 l/kg eingesetzt.

Die anfangs eingesetzte Heißwassersuspension mit dem aus der Reaktion entstandenen verunreinigten Rohcelluloseether besitzt im vorgenannten Verfahren eine Feststoffkonzentration von 2 bis 25 Gew.%, bevorzugt 5 bis 18 Gew.-%.

In einer bevorzugten Verfahrensweise werden die Filtrate und Spülwässer zur Herstellung der ursprünglichen Suspension oder zur Produktwäsche in die Waschzonen zurückgeführt. Bevorzugt ist die Rückführung der Waschfiltrate aus den Zonen mit Waschwasser- und Wasserdampfzufuhr zur Herstellung der Ausgangssuspension und die Rückführung der Spülwässer zur Produktwäsche in Arbeitszone 3.

Die nach dem vorgenannten Verfahren gereinigten Polysaccharidderivate sind bevorzugt Celluloseether und besonders bevorzugt Alkylhydroxyalkylcellulosen. Die Flockpunkte der nach dem vorgenannten Verfahren hergestellten Alkylhydroxyalkylcellulosen sind abhängig vom Substituenten, vom Substitutionsgrad sowie vom Elektrolytgehalt und liegen für eine 1 Gew.%-ige wässrige Lösung mit dem gereinigten Fertigprodukt zwischen 20 °C und 100 °C, besonders bevorzugt zwischen 35 °C und 90 °C.

Die zu erzielenden Natriumchloridgehalte der hergestellten Alkylhydroxyalkylcellulosen werden auf den Trockengehalt des Produkts bezogen und liegen bei Einsatz des erfindungsgemäßen Verfahrens unterhalb von 3,0 Gew.%, bevorzugt unterhalb von 0,5 Gew.%, besonders bevorzugt unterhalb von 0,1 Gew.-%.

Nach Produktaustrag aus der kontinuierlichen Filtervorrichtung kann das gereinigte Polysaccharidderivat nach den an sich üblichen Methoden gegebenenfalls parallel zur oder im Anschluss an eine Trocknung gemahlen werden. Das erhaltene Endprodukt oder Polysaccharidderivat im Rahmen der vorliegenden Erfindung besitzt nach der Mahlung und Trocknung einen Gehalt an Restfeuchte in Form von Wasser und/oder Alkoholen von weniger als 10 Gew.%, bevorzugt weniger als 4 Gew.-%.

### Beispiele:

Alle Prozentangaben sind, sofern nicht abweichend vermerkt als Gewichtsprozent zu verstehen.

### Vergleichsbeispiel 1: (ohne externe Re-Suspendierung)

Methylhydroxypropylcellulose (HPMC) mit einem DS (M) von 1,44, einem MS (HP) von 0,26 und einem Flockpunkt einer 1 Gew.-%-igen wässrigen Lösung des gereinigten Produktes von 70 °C wurde mit 90 °C heißem Wasser zu einer Suspension mit einem Feststoffgehalt von 7,5 % vermischt. Die Suspension wurde einem vorgeheizten Druckdrehfilter mit einer Filterfläche von 0,12 m², einem Filtergewebe mit 80 µm Maschenweite und einer Umlaufgeschwindigkeit von 0,75 U/min mit nachfolgender Arbeitsschrittreihenfolge zugeführt. Die resultierende Filterbeladung, angegeben als filtriertes getrocknetes Fertigprodukt pro Filterfläche und Zeiteinheit, betrug 123 kg/m² h.
o 1. Arbeitszone: Suspensionsaufgabe mit 190 l/h, Filterkuchenbildung
o 2. Arbeitszone: Einleitung von Wasserdampf mit 1,5 bar Überdruck
o 3. Arbeitszone: Waschwasserzufuhr (95 °C) von 300 l/h
o 4. Arbeitszone: Waschwasserzufuhr (95 °C) von 150 l/h
o 5. Arbeitszone: Einleitung von Wasserdampf mit 0,6 bar Überdruck
o 6. Arbeitszone: Produktabtrennung vom Filtermittel
o 7. Arbeitszone: Zufuhr von Spülwasser (95 °C) zur Filtermittelreinigung

Der Cellether ließ sich nicht stabil mit dem Druckdrehfilter über einen längeren technisch relevanten Zeitraum hinweg abtrennen und durch Dampf- und Waschwasserzufuhr reinigen. Bereits nach kurzer Laufzeit kleiner 5 Minuten waren die Filterkammern ungleichmäßig befüllt, die Durchsätze schwankten stark und das Filtergewebe war verstopft, so dass die Separation unterbrochen werden musste und ein Reinigungsintervall ohne Suspensionszugabe erforderlich war. Auch nach der Reinigung des Filtergewebes war das Filtergewebe bei Suspensionszugabe nach kurzer Zeit erneut verstopft. Die resultierende Methylhydroxypropylcellulose wies aufgrund der instabilen Fahrweise eine stark schwankende Qualität und eine nicht gegebene Reproduzierbarkeit auf.

Der NaCl-Gehalt und die Feuchtigkeit im Produkt variierten stark. Die NaCl-Gehalte von Einzelproben des gemahlenen und getrockneten Endproduktes lagen zum Teil deutlich über 3 Gew.-% bezogen auf den Trockengehalt der Proben, der Gehalt an Restfeuchte in Form von Wasser erreichte nach der Produktwäsche Werte über 70 %.

### Beispiel 2: (mit externer Re-Suspendierung)

Methylhydroxypropylcellulose (HPMC) mit einem DS (M) von 1,44, einem MS (HP) von 0,26 und einem Flockpunkt einer 1 Gew.-%-igen wässrigen Lösung des gereinigten Produktes von 68 °C wurde mit 90 °C heißem Wasser zu einer Suspension mit einem Feststoffgehalt von 8 % vermischt. Die Suspension wurde einem vorgeheizten Druckdrehfilter mit einer Filterfläche von 0,12 m², einem Filtergewebe mit 80 µm Maschenweite und einer Umlaufgeschwindigkeit von 0,75 U/min mit nachfolgender Arbeitsschrittreihenfolge zugeführt. Die resultierende Filterbeladung, angegeben als filtriertes getrocknetes Fertigprodukt pro Filterfläche und Zeiteinheit, betrug 158 kg/m² h.
o 1. Arbeitszone: Suspensionsaufgabe mit 240 l/h, Filterkuchenbildung
o 2. Arbeitszone: Einleitung von Wasserdampf mit 1,5 bar Überdruck
o 3. Arbeitszone: Abtrennung des Filterkuchens und Resuspendierung unter Waschwasserzufuhr (95 °C) von 300 l/h mit einer Verweilzeit von 5 min in einem separaten Rührbehälter
o 4. Arbeitszone: Rückführung der Suspension, Filterkuchenbildung
o 5. Arbeitszone: Waschwasserzufuhr (95 °C) von 150 l/h
o 6. Arbeitszone: Einleitung von Wasserdampf mit 0,6 bar Überdruck
o 7. Arbeitszone: Produktabtrennung vom Filtermittel
o 8. Arbeitszone: Zufuhr von Spülwasser (95 °C) zur Filtermittelreinigung

Der Cellether ließ sich stabil mit dem Druckdrehfilter abtrennen und durch Dampf- und Waschwasserzufuhr reinigen. Die Filterkammern waren gleichmäßig befüllt und es kam zu keiner Verstopfung des Filtergewebes. Das Filtergewebe war auch nach einer längeren Betriebszeit von mehr als 45 Minuten nicht durch Produktreste belegt. Die resultierende Methylhydroxypropylcellulose weist nach der Produktwäsche einen gleich bleibenden Gehalt an Restfeuchte von 36,5 Gew.-% in Form von Wasser auf, im gemahlenen und getrockneten Endprodukt liegt ein Salzgehalt von 0,01 Gew.-% bezogen auf den Trockengehalt der Probe vor.

### Beispiel 3: (mit externer Re-Suspendierung)

Methylhydroxypropylcellulose (HPMC) mit einem DS (M) von 1,94, einem MS (HP) von 0,15 und einem Flockpunkt einer 1 Gew.-%-igen wässrigen Lösung des gereinigten Produktes von 57 °C wurde mit 90 °C heißem Wasser zu einer Suspension mit einem Feststoffgehalt von 7 % vermischt. Die Suspension wurde einem vorgeheizten Druckdrehfilter mit einer Filterfläche von 0,12 m², einem Filtergewebe mit 80 µm Maschenweite und einer Umlaufgeschwindigkeit von 0,55 U/min mit nachfolgender Arbeitsschrittreihenfolge zugeführt. Die resultierende Filterbeladung, angegeben als filtriertes getrocknetes Fertigprodukt pro Filterfläche und Zeiteinheit, betrug 211 kg/m² h.
o 1. Arbeitszone: Suspensionsaufgabe mit 345 l/h, Filterkuchenbildung
o 2. Arbeitszone: Einleitung von Wasserdampf mit 1,3 bar Überdruck
o 3. Arbeitszone: Abtrennung des Filterkuchens und Resuspendierung unter Waschwasserzufuhr (95 °C) von 155 l/h mit einer Verweilzeit von 8 min in einem separaten Rührbehälter
o 4. Arbeitszone: Rückführung der Suspension, Filterkuchenbildung
o 5. Arbeitszone: Waschwassercufuhr (95 °C) von 75 l/h
o 6. Arbeitszone: Einleitung von Wasserdampf mit 0,6 bar Überdruck
o 7. Arbeitszone: Produktabtrennung vom Filtermittel
o 8. Arbeitszone: Zufuhr von Spülwasser (95 °C) zur Filtermittelreinigung

Der Cellether ließ sich stabil mit dem Druckdrehfilter abtrennen und durch Dampf- und Waschwasserzufuhr reinigen. Die Filterkammern waren gleichmäßig befüllt und es kam zu keiner Verstopfung des Filtergewebes. Das Filtergewebe war auch nach einer längeren Betriebszeit von mehr als 45 Minuten nicht durch Produktreste belegt. Die resultierende Methylhydroxypropylcellulose weist nach der Produktwäsche einen gleich bleibenden Gehalt an Restfeuchte von 34,1 % in Form von Wasser auf, im gemahlenen und getrockneten Endprodukt liegt ein Salzgehalt von 0,03 Gew.-% bezogen auf den Trockengehalt der Probe vor.

### Beispiel 4: (mit externer Re-Suspendierung)

Methylhydroxyethylcellulose (HEMC) mit einem DS (M) von 1,59, einem MS (HE) von 0,32 und einem Flockpunkt einer 1 Gew.%-igen wässrigen Lösung des gereinigten Produktes von 75 °C wurde mit 90 °C heißem Wasser zu einer Suspension mit einem Feststoffgehalt von 8 % vermischt. Die Suspension wurde einem vorgeheizten Druckdrehfilter mit einer Filterfläche von 0,12 m², einem Filtergewebe mit 80 µm Maschenweite und einer Umlaufgeschwindigkeit von 1,2 U/min mit nachfolgender Arbeitsschrittreihenfolge zugeführt. Die resultierende Filterbeladung, angegeben als filtriertes getrocknetes Fertigprodukt pro Filterfläche und Zeiteinheit, betrug 243 kg/m² h.
o 1. Arbeitszone: Suspensionsaufgabe mit 370 l/h, Filterkuchenbildung
o 2. Arbeitszone: Einleitung von Wasserdampf mit 1,4 bar Überdruck
o 3. Arbeitszone: Abtrennung des Filterkuchens und Resuspendierung unter Waschwasserzufuhr (95 °C) von 300 l/h mit einer Verweilzeit von 5,5 min in einem separaten Rührbehälter
o 4. Arbeitszone: Rückführung der Suspension, Filterkuchenbildung
o 5. Arbeitszone: Einleitung von Wasserdampf mit 0,8 bar Überdruck
o 6. Arbeitszone: Produktabtrennung vom Filtermittel
o 7. Arbeitszone: Zufuhr von Spülwasser (95 °C) zur Filtermittelreinigung

Der Cellether ließ sich stabil mit dem Druckdrehfilter abtrennen und durch Dampf- und Waschwasserzufuhr reinigen. Die Filterkammern waren gleichmäßig befüllt und es kam zu keiner Verstopfung des Filtergewebes. Das Filtergewebe war auch nach einer längeren Betriebszeit von mehr als 45 Minuten nicht durch Produktreste belegt. Die resultierende Methylhydroxyethylcellulose weist nach der Produktwäsche einen gleich bleibenden Gehalt an Restfeuchte von 46 % in Form von Wasser auf, im gemahlenen und getrockneten Endprodukt liegt ein Salzgehalt von 0,31 Gew.-% bezogen auf den Trockengehalt der Probe vor.

## Patentansprüche

1. Verfahren zur Aufreinigung von Polysaccharidderivaten, wenigstens umfassend die Schritte (1) Zuführung einer wasser- und/oder alkoholenthaltenden Suspension eines Polysaccharidderivats in eine kontinuierlich arbeitende Filtervorrichtung mit mehreren Arbeitszonen und zumindest teilweise Abtrennung der Flüssigphase unter Ausbildung eines Filterkuchen, (2) Ausschleusung des in (1) erhaltenen Filterkuchens aus der kontinuierlich arbeitenden Filtervorrichtung, Re-Suspendierung des ausgeschleusten Filterkuchens mittels einer wasser- und/oder alkoholenthaltenden Waschlösung in einer Vorrichtung, (3) Rückführung der so erhaltenen Suspension in eine Arbeitszone der kontinuierlich arbeitenden Filtervorrichtung und wenigstens teilweise Abtrennung der Flüssigphase unter Ausbildung eines Filterkuchens und (4) Ausschleusung des gereinigten Polysaccharidderivats in Form eines gegebenenfalls wasser- und/oder alkoholfeuchten Filterkuchens aus der kontinuierlich arbeitenden Filtervorrichtung.

2. Verfahren gemäß Anspruch 1, **dadurch gekennzeichnet, dass** die Vorrichtung zur Re-Suspendierung in Schritt (2) ein Rührbehälter ist.

3. Verfahren gemäß Anspruch 1 oder 2, **dadurch gekennzeichnet, dass** die kontinuierlich arbeitende Filtervorrichtung mit mehreren Arbeitszonen ein Bandfilter, Scheibenfilter, Trommel- oder Drehfilter ist.

4. Verfahren gemäß Anspruch 3, **dadurch gekennzeichnet, dass** die Filtervorrichtung ein Druckdrehfilter ist.

5. Verfahren gemäß einem der Ansprüche 1 bis 4, **dadurch gekennzeichnet, dass** das Verfahren wenigstens die folgenden Arbeitszonen umfasst:
■ Suspensionsaufgabe, Filterkuchenbildung
■ Einleitung von Wasserdampf
■ Abtrennung des Filterkuchens und Re-Suspendierung unter Zufuhr von Waschmedium in einem separaten Rührbehälter
■ Rückführung der Suspension, Filterkuchenbildung
■ Zufuhr von Waschmedium
■ Einleitung von Wasserdampf
■ Produktabtrennung vom Filtermittel
■ Zufuhr von Spülwasser zur Filtermittelreinigung

6. Verfahren gemäß einem der Ansprüche 1 bis 5, **dadurch gekennzeichnet, dass** ein Filtergewebe mit einer Maschenweite von 60 bis 100 µm eingesetzt wird.

7. Verfahren gemäß einem der Ansprüche 1 bis 6, **dadurch gekennzeichnet, dass** die Filterbeladung, angegeben als filtriertes getrocknetes Fertigprodukt pro Filterfläche und Zeiteinheit, 150 bis 600 kg/m² h beträgt.

8. Verfahren gemäß einem der Ansprüche 1 bis 7, **dadurch gekennzeichnet, dass** die Verweilzeit des zu re-suspendierenden Filterkuchens in der zur Re-Suspendierung eingesetzten Vorrichtung 3 bis 15 min beträgt.

9. Verfahren gemäß einem der Ansprüche 1 bis 8, **dadurch gekennzeichnet, dass** die Polysaccharidderivate Alkylhydroxyalkylcellulosen sind, die als gereinigte Substanz Flockpunkte zwischen 35 und 90 °C gemessen an einer 1 Gew.%-igen wässrige Lösung aufweisen.

10. Verfahren gemäß einem der Ansprüche 1 bis 9, **dadurch gekennzeichnet, dass** der Natriumchloridgehalte im gemahlenen und getrockneten Endprodukt weniger als 0,5 Gew.-% bezogen auf den Trockengehalt der Probe beträgt.

11. Verfahren gemäß einem der Ansprüche 1 bis 10, **dadurch gekennzeichnet, dass** das so erhaltene aufgereinigte Polysaccharidderivat im Anschluss gegebenenfalls parallel zur oder im Anschluss an eine Trocknung gemahlen wird.

## Claims

1. Process for purifying polysaccharide derivatives, at least comprising the steps (1) feeding a suspension of a polysaccharide derivative, containing water and/or alcohol, into a continuously operating filter device having a plurality of working zones and at least partially separating the liquid phase, forming a filter cake, (2) removing the filter cake obtained in (1) from the continuously operating filter device, re-suspending the removed filter cake in a device by means of a washing solution containing water and/or alcohol, (3) recycling the suspension obtained in this way into a working zone of the continuously operating filter device and at least partially separating the liquid phase, forming a filter cake, and (4) removing the purified polysaccharide derivative in the form of a filter cake, possibly moistened with water and/or alcohol, from the continuously operating filter device.

2. Process according to Claim 1, **characterized in that** the device for re-suspension in step (2) is a stirred container.

3. Process according to Claim 1 or 2, **characterized in that** the continuously operating filter device having a plurality of working zones is a band filter, disc filter, drum filter or rotary filter.

4. Process according to Claim 3, **characterized in that** the filter device is a rotary pressure filter.

5. Process according to one of Claims 1 to 4, **characterized in that** the process comprises at least the following working zones:
• Addition of suspension, formation of filter cake
• Introduction of steam
• Separation of the filter cake and re-suspension with the supply of washing medium in a separate stirred container
• Recycling of the suspension, formation of filter cake
• Supply of washing medium
• Introduction of steam
• Product separation from the filtering agent
• Supply of rinsing water for cleaning the filtering agent

6. Process according to one of Claims 1 to 5, **characterized in that** use is made of a mesh fabric having a mesh size of 60 to 100 µm.

7. Process according to one of Claims 1 to 6, **characterized in that** the filter loading, specified as filtered dry finished product per filter area and unit time, is 150 to 600 kg/m² h.

8. Process according to one of Claims 1 to 7, **characterized in that** the residence time of the filter cake to be re-suspended in the device used for the re-suspension is 3 to 15 minutes.

9. Process according to one of Claims 1 to 8, **characterized in that** the polysaccharide derivatives are alkylhydroxyalkylcelluloses which, as a purified substance, have flocculation points between 35 and 90 °C, measured on a 1% by weight aqueous solution.

10. Process according to one of Claims 1 to 9, **characterized in that** the sodium chloride contents in the milled and dried end product are less than 0.5% by weight, based on the dry content of the sample.

11. Process according to one of Claims 1 to 10, **characterized in that** the purified polysaccharide derivative obtained in this way is then milled, if appropriate in parallel with or following drying.

## Revendications

1. Procédé de purification de dérivés de polysaccharides, comprenant au moins les étapes (1) d'acheminement d'une suspension contenant de l'eau et/ou de l'alcool d'un dérivé de polysaccharide dans un dispositif de filtration fonctionnant en continu ayant plusieurs zones de travail et de séparation au moins partielle de la phase liquide en formant un gâteau de filtre, (2) d'élimination du gâteau de filtre obtenu à l'étape (1) du dispositif de filtration fonctionnant en continu, de remise en suspension du gâteau de filtre éliminé au moyen d'une solution de lavage contenant de l'eau et/ou de l'alcool dans un dispositif, (3) de recyclage de la suspension ainsi obtenue dans une zone de travail du dispositif de filtration fonctionnant en continu et de séparation au moins partielle de la phase liquide en formant un gâteau de filtre, et (4) d'élimination du dérivé de polysaccharide purifié sous la forme d'un gâteau de filtre mouillé éventuellement à l'eau et/ou à l'alcool du dispositif de filtration fonctionnant en continu.

2. Procédé selon la revendication 1, **caractérisé en ce que** le dispositif de remise en suspension de l'étape (2) est un récipient d'agitation.

3. Procédé selon la revendication 1 ou 2, **caractérisé en ce que** le dispositif de filtration fonctionnant en continu ayant plusieurs zones de travail est un filtre à bande, un filtre à disque, un filtre à tambour ou un filtre rotatif.

4. Procédé selon la revendication 3, **caractérisé en ce que** le dispositif de filtration est un filtre rotatif sous pression.

5. Procédé selon l'une quelconque des revendications 1 à 4, **caractérisé en ce que** le procédé comprend au moins les zones de travail suivantes :
- tâche de mise en suspension, formation du gâteau de filtre
- introduction de vapeur d'eau
- séparation du gâteau de filtre et remise en suspension en acheminant un milieu de lavage dans un récipient d'agitation séparé
- recyclage de la suspension, formation du gâteau de filtre
- acheminement d'un milieu de lavage
- introduction de vapeur d'eau
- séparation de produit du moyen de filtration, et
- acheminement d'eau de rinçage pour le nettoyage du moyen de filtration.

6. Procédé selon l'une quelconque des revendications 1 à 5, **caractérisé en ce que** l'on utilise un tissu filtrant avec une ouverture de mailles de 60 à 100 µm.

7. Procédé selon l'une quelconque des revendications 1 à 6, **caractérisé en ce que** la charge du filtre, indiquée comme un produit fini sec filtré par surface du filtre et unité de temps, est de 150 à 600 kg/m² h.

8. Procédé selon l'une quelconque des revendications 1 à 7, **caractérisé en ce que** le temps de séjour du gâteau de filtre remis en suspension dans le dispositif employé pour la remise en suspension est de 3 à 15 min.

9. Procédé selon l'une quelconque des revendications 1 à 8, **caractérisé en ce que** les dérivés de polysaccharides sont des alkylhydroxyalkylcelluloses qui présentent, comme substance purifiée, des points de floculation entre 35 et 90 °C mesurés dans une solution aqueuse à 1 % en poids.

10. Procédé selon l'une quelconque des revendications 1 à 9, **caractérisé en ce que** la teneur en chlorure de sodium dans le produit fini broyé et séché est inférieure à 0,5 % en poids, par rapport à la teneur en matière sèche de l'échantillon.

11. Procédé selon l'une quelconque des revendications 1 à 10, **caractérisé en ce que** le dérivé de polysaccharide purifié ainsi obtenu est ensuite broyé éventuellement en parallèle avec un séchage ou à la suite d'un séchage.
